Europäisches Patentamt

European Patent Office

Office européen des brevets

(11) Veröffentlichungsnummer: **0 294 575**
**A1**

(12) **EUROPÄISCHE PATENTANMELDUNG**

(21) Anmeldenummer: 88106598.1

(22) Anmeldetag: 25.04.88

(51) Int. Cl.⁴: **E04B 1/18 , E04B 1/24 , E04B 1/26 , E04C 3/38**

(30) Priorität: 24.04.87 DE 3713838

(43) Veröffentlichungstag der Anmeldung:
14.12.88 Patentblatt 88/50

(84) Benannte Vertragsstaaten:
**AT BE DE FR GB**

(71) Anmelder: **GANG-NAIL SYSTEME GMBH**
**Geyerspergerstrasse 73**
**D-8000 München 21(DE)**

(72) Erfinder: **Kupka, Horst R., Dipl.-Ing.**
**Rabenstrasse 8**
**D-8031 Eichenau(DE)**
Erfinder: **Rottmüller, Vitus, Dipl.-Ing.**
**Auenstrasse 4**
**D-8301 Bruckberg(DE)**

(74) Vertreter: **Glawe, Delfs, Moll & Partner**
**Patentanwälte**
**Postfach 26 01 62 Liebherrstrasse 20**
**D-8000 München 26(DE)**

(54) Eckverbindung für Rahmenkonstruktionen für Gebäude, sowie Verfahren zu ihrer Herstellung.

(57) Eine biegesteife Eckverbindung für Rahmenkonstruktionen für Gebäude , insbesondere für Holzträger, wird in der Weise hergestellt, daß an den auf Gehrung geschnittenen Trägern (1, 3) Laschen (7, 8, 9) befestigt und die Enden der Laschen (7, 8, 9) nach dem aluminothermischen Schmelzschweißverfahren miteinander unter Bildung von Gußkörpern (14, 15) verschweißt werden.

Fig. 1

Xerox Copy Centre

EP 0 294 575 A1

## Eckverbindung für Rahmenkonstruktionen für Gebäude , sowie Verfahren zu ihrer Herstellung

Die Erfindung betrifft eine Eckverbindung für Rahmenkonstruktionen für Gebäude von der im Oberbegriff des Anspruchs 1 angegeben Art sowie ein Verfahren zur Herstellung einer derartigen Eckverbindung.

Eine Eckverbindung der angegebenen Art ist aus der DE-OS 33 25 322 bekannt. Der Vorteil einer solchen Eckverbindung liegt darin, daß sie als biegesteife Eckverbindung auf der Baustelle mit sehr einfachen Mitteln und Arbeitsvorgängen hergestellt werden kann, so daß es nicht nötig ist, die Träger bereits werkseitig zu einer schwer zu transportierenden Rahmenkonstruktion zu vereinigen.

Bei der bekannten Eckverbindung ist das Verbindungsstück ein vorgefertigtes Formteil, z.B. ein Gußteil oder auch ein geschweißtes Formteil, welches auf der Baustelle mit den auf passende Länge stumpf zugeschnittenen Trägern verbunden wird, indem die Trägerenden zwischen die paarweise parallel verlaufenden Laschen des Verbindungsstücks eingeschoben und mit ihnen durch Verbindungsmittel, z.B. Schrauben, Nägel oder auch durch Kleben, verbunden sind.

Damit eine solche Montage möglich ist, muß der Laschenabstand des vorgefertigten Verbindungsstückes an die Höhe der an die Baustelle zugelieferten Träger angepaßt sein, und zwar mit einem das Einschieben der Trägerenden ermöglichenden Übermaß. In der Praxis ist es aber, schon wegen der unvermeidlichen Abmessungstoleranzen von z.B. Holzträgern, unvermeidlich, daß ein beträchtliches und nicht vorhersagbares Spiel zwischen Trägern und Verbindungsstück vorhanden sein muß und die Trägerenden häufig nur relativ lose zwischen den Laschen des Verbindungsstücks sitzen. Bei nicht exakt formschlüssig zwischen den Laschen aufgenommenen Trägerenden kann aber eine ausreichend biegesteife und belastbare Eckverbindung nicht erzielt werden. Dies gilt erst recht dann, wenn auch zwischen den Stirnflächen der Träger und dem Steg des Verbindungsstückes freie Zwischenräume verbleiben, wie dies bei der bekannten Eckverbindung der Fall ist. Für eine solche Eckverbindung können daher exakte Normwerte der Belastbarkeit nicht definiert und garantiert werden. Ein weiterer Nachteil besteht darin, daß für unterschiedliche Trägerhöhen, die je nach der geforderten Spannweite usw. zur Anwendung kommen, auch entsprechend unterschiedlich große Verbindungsstücke vorgefertigt und auf Lager gehalten werden müssen.

Der Erfindung liegt die Aufgabe zugrunde, eine Eckverbindung der genannten Art und das Verfahren für ihre Herstellung so zu verbessern, daß die Eckverbindung unabhängig von Maßtoleranzen der verwendeten Träger eine gleichbleibend hohe und zuverlässig einhaltbare Biegesteifigkeit und Belastbarkeit aufweist, ohne daß der Vorteil, die Eckverbindung an der Baustelle einfach und rasch ohne Spezialmaschinen und Spezialkräfte herstellen zu können, verlorengeht.

Die Aufgabe wird erfindungsgemäß durch die im Anspruch 1 angegebene Eckverbindung und das im Anspruch 6 angegebene Verfahren zu ihrer Herstellung gelöst. Die übrigen Ansprüche geben vorteilhafte weitere Ausgestaltungen an.

Der Vorteil der erfindungsgemäßen Eckverbindung besteht darin, daß die Träger fabrikseitig, z.B. im Falle von Holzträgern im Zimmereibetrieb, durch Zuschneiden der Träger und Anbringen der Laschen für das Zusammenfügen fertig vorbereitet werden können, wobei durch Anwendung standardisierter Befestigungsmethoden ausreichende Festigkeitswerte der Träger-Lasche-Verbindung zuverlässig eingehalten werden können, und daß die so vorbereiteten Träger an der Baustelle lediglich in der erforderlichen Position zusammengefügt und fixiert und dann die Enden der Laschen und des Steges durch Anwendung des Thermit-Schmelzschweißverfahrens in Gußkörper eingebettet und dadurch miteinander zu dem Verbindungsstück verbunden werden. Die so hergestellten Gußkörper verbinden die Teile des Verbindungsstückes mit einer Festigkeit, die mindestens ebenso groß ist, wie es bei einem durch Gießen oder Schweißen vorgefertigten Verbindungsstück der Fall wäre. Da aber vorab die Einzelteile des Verbindungsstücks an den Trägern befestigt werden, entsteht zwischen diesen und den Trägern keinerlei Spiel, und die Festigkeit der fertigen Verbindung ist von den Höhentoleranzen der Träger völlig unabhängig. Wenn, gemäß einer vorteilhaften Ausführungsform der Erfindung, die Träger auf Gehrung geschnitten sind und mit ihren Stirnflächen am Steg des Verbindungsstücks satt anliegen, entsteht eine außerordentlich biegesteife und gegen statische Belastungen sowie auch Wechsellasten widerstandsfähige Eckverbindung.

Die erfindungsgemäße Eckverbindung ist besonders vorteilhaft zur Verbindung von Holzträgern im Holzrahmenbau anwendbar, wobei die Laschen an den Trägern durch im Holzbau bewährte Verbindungsmittel wie Schrauben, Nägel, evtl. auch Kleben, verbunden werden können. Die Eckverbindung ist aber auch bei Trägern aus anderem Material anwendbar, z.B. können mit ihr auch Träger aus Stahl miteinander oder mit Holzträgern verbunden werden, wobei man die Laschen an den Seitenflächen der Stahlträger durch Schrauben oder durch Schweißen befestigen kann.

Ausführungsformen der Erfindung werden anhand der Zeichnungen näher erläutert. Es zeigt:

Fig. 1 eine Seitenansicht einer erfindungsgemäß ausgebildeten Eckverbindung;

Fig. 2 einen gedachten Schnitt durch eines der in den Knotenbereichen der Eckverbindung gebildeten Gußstücke;

Fig. 3 und 4 gedachte Schnitte durch Gußstücke gemäß anderen Ausführungsformen der Eckverbindung;

Fig. 5 und 6 schematische Darstellungen im Vertikalschnitt und in Draufsicht zur Veranschaulichung des Herstellungsverfahrens der Eckverbindung.

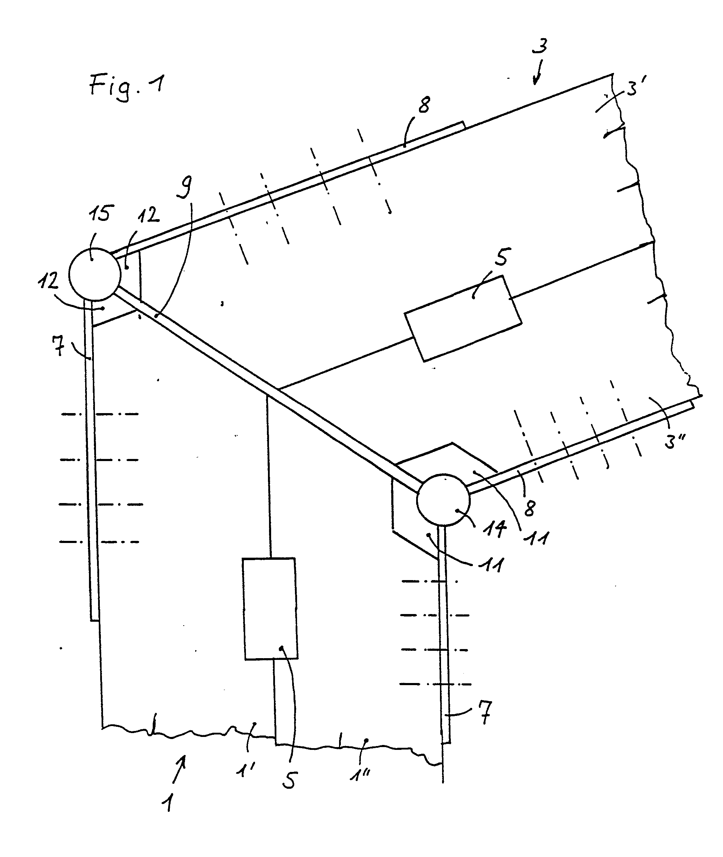

In Fig. 1 ist eine Eckverbindung zweier Träger 1 und 3 dargestellt, bei denen es sich um den Stiel und den Riegel einer offenen Holzrahmenkonstruktion handeln kann. Bei dem Ausführungsbeispiel besteht jeder Träger aus z.B. zwei nebeneinanderliegenden Balken 1′, 1″, bzw. 3′, 3″, die mit geeigneten Mitteln, z.B. Nagelplatten 5, miteinander verbunden sind. Die Träger 1 und 3 sind entsprechend dem gewünschten Winkel der Eckverbindung auf Gehrung geschnitten. An den Winkelinnen- und -außenseiten der Träger 1, 3 sind aus Stahlblech bestehende Laschen 7, 8 befestigt, z.B. durch Kammnägel oder durch andere im Holzbau übliche Befestigungsmittel, die nur strichpunktiert angedeutet sind. Zwischen den Gehrungsschnittflächen der Träger 1, 3 verläuft als Steg eine Stahlplatte 9, an der die Gehrungsschnittflächen der Träger anliegen.

Im Bereich des inneren und äußeren Winkelscheitels haben die Träger 1, 3 Aussparungen 11 bzw. 12. Die Enden der Laschen 7, 8 und des Stegs 9 stehen über diese Aussparungen über und sind in runden Gußstücken 14, 15 aus Stahl eingebettet und eingeschweißt, wobei diese Gußstücke 14, 15 die Verbindungsknoten bilden, durch welche die Laschen 7, 8 und der Steg 9 unlösbar zu einem Verbindungsstück verbunden sind, welches die Träger 1, 3 miteinander biegesteif verbindet. Die Herstellung der Gußstücke 14, 15 erfolgt, wie noch erläutert wird, nach dem Thermit-Gießschweißverfahren.

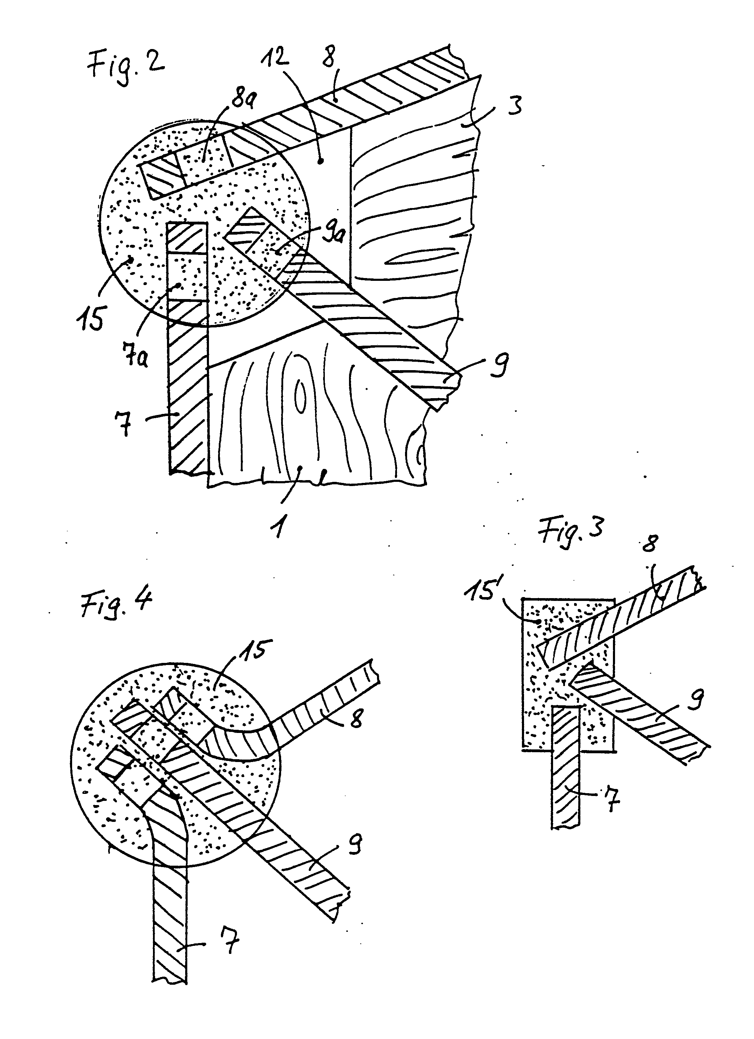

Fig. 2 zeigt einen schematischen Schnitt im Bereich eines der Knoten der Eckverbindung. Wie man erkennt, ragen die Endbereiche der Laschen 7,8 und des Steges 9 in das Gußstück 15 hinein. Sie sind vorzugsweise mit einer oder mehreren Bohrungen 7a, 8a, 9a oder anderen Ausnehmungen versehen, die beim Gießen des Gußstücks 15 vom Gießmaterial ausgefüllt werden, so daß man eine zusätzliche formschlüssige Verbindung der Teile ähnlich einer Vernietung erhält. Die in Fig. 2 dargestellten scharfen Grenzkonturen der Teile 7, 8, 9 im Gußstück 15 sind idealisiert, da man in der Praxis eine Verschweißung des Materials des Guß5 mit den Teilen 7, 8, 9 mit einem kontinuierlichen Übergangsgefüge erhält.

Wie bereits erwähnt, werden bei der Herstellung der Eckverbindung zunächst die Teile 7 und 8 mit den auf Gehrung geschnittenen Trägern 1, 3 verbunden, vorzugsweise bereits werkseitig. Der Steg 9 kann ein loses Teil sein, oder er kann ebenfalls werkseitig an einem der Träger 1, 3 an dessen Gehrungsschnittfläche befestigt werden. In diesem Zustand werden die noch unverbundenen Träger 1 und 3 an die Baustelle transportiert, dort in der passenden Position zusammengelegt und zusammengespannt und dann durch Herstellen des Gußstücks 15 bzw. des Gußstücks 14 auf der anderen Seite der Eckverbindung miteinander verbunden.

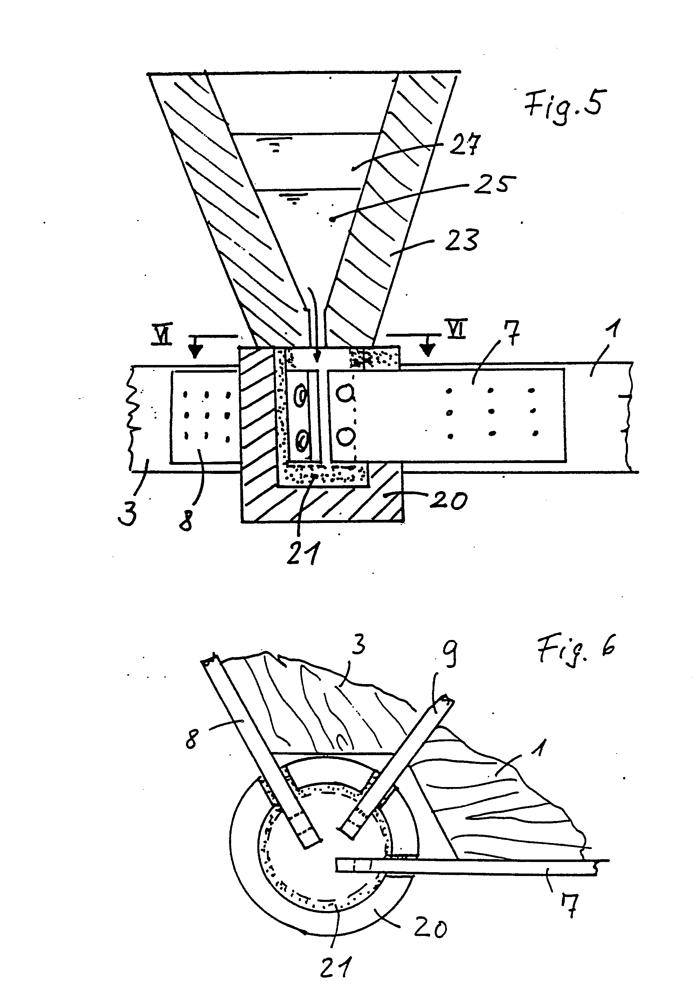

Die äußere Form des Gußstücks 15 braucht nicht zylindrisch zu sein, sondern kann je nach den Gegebenheiten und den z.B. auch ästhetischen Erfordernissen gewählt werden. Fig. 3 zeigt beispielsweise eine Ausführungsform mit einem im Querschnitt rechteckigen Gußstück 15′. Auch die Einbettung der Enden der Laschen und des Steges in das Gußstück kann anders als in Fig. 2 erfolgen. Fig. 4 zeigt als Beispiel eine Ausführungsform, bei der die Enden der Laschen nach außen abgebogen sind, so daß sie und das Ende des Steges etwa parallel zueinander im Gußstück liegen.

Wie Fig. 5 und 6 zeigen, wird das Gußstück 15 mit Hilfe eines Gießgefäßes 20 aus feuerfestem Material hergestellt. Das Gießgefäß 20 hat in seiner Wandung geeignete Schlitze, durch die sich die Enden der Laschen 7, 8 und des Steges 9 in das Innere des Gießgefäßes 20 erstrecken können. Nachdem die Träger 1, 3 mit den daran befestigten Teilen 7, 8, 9 in geeigneter Weise positioniert worden sind, wird das Gießgefäß 20 von unten her aufgeschoben. Die Ausschnitte 11, 12 der Träger 1, 3 müssen so groß bemessen sein, daß das relativ dickwandige Gießgefäß 20 Platz hat. Das Gießgefäß 20 wird anschließend noch mit einer Schicht 21 aus Gießsand oder einer anderen Formmasse ausgekleidet, um insbesondere die Durchtrittsstellen der Laschen 7, 8 und des Steges 9 abzudichten. In das so vorbereitete Gießgefäß 20 wird dann mittels des aufgesetzten trichterförmigen Schmelztiegels 23 die nach dem Thermitverfahren gewonnene flüssige Stahlschmelze eingefüllt. Das Thermitverfahren oder auch aluminothermische Verfahren ist bekanntlich ein Verfahren, bei dem zunächst in dem Tiegel 23 ein pulverförmiges Gemisch von Eisenoxid und Aluminiumpulver, ggf. mit weiteren Legierungszuschlägen, bereitgestellt wird. Nach Zünden des Gemisches reagieren die Bestandteile zu Aluminiumoxid und einer Eisen- bzw. Stahlschmelze, wobei die freiwerdende Reaktionswärme ausreicht, um Schmelze und oxidische Schlacke in heißflüssigen Zustand zu versetzen.

Man läßt die Stahlschmelze aus dem Tiegel 23 in die Gußform 20 einlaufen, während oben aufschwimmende Schlacke 27 im Tiegel 23 verbleibt. Nach dem Erkalten kann das Gießgefäß 20 weggenommen werden und man erhält das in Fig. 1 dargestellte, die Teile unlösbar miteinander verbindende Gußstück 15. Entsprechend erfolgt die Herstellung des Gußstücks 14 an der Winkelinnenseite. Das Thermit-Schmelzschweißverfahren ist z.B. für das Verschweißen von Eisenbahnschienen seit Jahrzehnten bewährt, kann mit standardisierter Ausrüstung auch von nichtspezialisierten Arbeitskräften rasch durchgeführt werden und ergibt hochbelastbare Schweiß- bzw. Gußverbindungen.

Die Erfindung ist nicht auf die Einzelheiten der dargestellten Ausführungsformen beschränkt. So kann die Eck verbindung nicht nur zur Verbindung eines Stiels und eines Riegels einer Rahmenkonstruktion, sondern auch zur Verbindung zweier Riegel z.B. im Firstbereich dienen. Die zu verbindenden Holzträger können abwechselnd vom First auch aus einfachen Balken oder aus drei oder mehr nebeneinanderliegenden und mit Nagelplatten verbundenen Balken, aus verdübelten Balken, Brettschichthölzern, Furnierschichthölzern und dgl. bestehen. Wie erwähnt, kann die Eckverbindung auch zum Verbinden von Stahlträgern miteinander oder eines Stahlträgers und eines Holzträgers dienen. Insbesondere kann es sich bei dem in Fig. 1 dargestellten Stiel 1 auch um einen Stahlträger handeln, wobei in diesem Fall die Laschen 7 an dem Träger 1 durch Schrauben, Schweißen oder Nieten befestigt werden können.

Aufgrund der beschriebenen Herstellung paßt sich die Eckverbindung von selbst an Maßabweichungen bzw. wechselnde Abmessungen der verwendeten Träger an. Die Metallteile sind völlig spielfrei mit den Trägern verbunden, so daß die Eckverbindung insgesamt ein sehr hohes Maß an Biegesteifigkeit aufweist.

## Ansprüche

1. Eckverbindung für Rahmenkostruktionen für Gebäude, bei der die im Winkel zusammenstoßenden Enden der Träger mittels eines Verbindungsstücks aus Stahl oder Eisen zusammengehalten sind, welches einen in der Winkeltrennfuge zwischen den Trägern angeordneten Steg und von diesem ausgehende Paare von Laschen aufweist, die winkelaußenseitig und winkelinnenseitig an den Trägern anliegen und an diesen befestigt sind, dadurch **gekennzeichnet,** daß die Laschen (7, 8) und der Steg (9) als getrennte Teile ausgebildet und ihre am inneren bzw. äußeren Winkelscheitel zusammentreffenden Enden in je einem im

Schmelzschweißverfahren hergestellten Gußkörper (14, 15) eingebettet und dadurch miteinander verbunden sind.

2. Eckverbindung nach Anspruch 1, dadurch **gekennzeichnet,** daß die Träger auf Gehrung geschnitten sind und ihre Stirnflächen an dem Steg (9) des Verbindungsstücks flächig anliegen.

3. Eckverbindung nach Anspruch 1 oder 2, dadurch **gekennzeichnet,** daß die Träger (1, 3) im Bereich des inneren und/oder äußeren Winkelscheitels Aussparungen (11, 12) aufweisen, in denen die Gußstücke (14, 15) mit Abstand aufgenommen sind.

4. Eckverbindung nach Anspruch 1, dadurch **gekennzeichnet,** daß die Enden der Laschen (7, 8) und/oder des Steges (9) innerhalb des jeweiligen Gußstückes (14, 15) Ausnehmungen (7a, 8a, 9a) aufweisen, die vom Material des Gußkörpers durchdrungen sind.

5. Eckverbindung nach Anspruch 1, dadurch **gekennzeichnet,** daß der Gußkörper (14, 15) zylindrisch oder polygonal ist.

6. Verfahren zum Herstellen einer Eckverbindung nach einem der Ansprüche 1 bis 5, dadurch **gekennzeichnet,** daß die Lschen (7, 8) vorweg, vorzugsweise werkseitig, an den Seitenflächen der Träger (1, 3) derart befestigt werden, daß ihre Enden in einem für das Einbetten in einen Gußkörper ausreichenden Maß über die Trägerenden oder dort vorgesehene Aussparungen (11, 12) überstehen, daß die so vorbereiteten Träger und der zwischen ihnen angeordnete Steg (9) an der Baustelle in der Verbindungsstellung zusammengesetzt und fixiert werden, daß um die überstehenden Enden der Laschen (7, 8) und des Steges (9) eine Gießform (20) angeordnet oder geformt wird, und daß die Gießform (20) dann nach dem aluminothermischen Schmelzschweißverfahren mit Stahl ausgegossen wird.

7. Verfahren nach Anspruch 6, dadurch **gekennzeichnet,** daß auch der Steg (9) vorweg, insbesondere werkseitig, an der Stirnfläche eines der Träger (1, 3) befestigt wird.

8. Verfahren nach Anspruch 6, dadurch **gekennzeichnet,** daß die Träger (1, 3) vor dem Anbringen der Laschen (7, 8) auf Gehrung geschnitten und an den Enden der Gehrungsschnittflächen mit Ausnehmungen (11, 12) für die Aufnahme der Gießform versehen werden.

Fig. 1

EP 0 294 575 A1

Fig. 2

8a
12
8
3
9a
9
15
7a
7
1

Fig. 4

15
8
9
7

Fig. 3

15'
8
9
7

EP 0 294 575 A1

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-0 129 176  (JOHANN WOLF GMBH KG) *Figuren 1-4, Zusammenfassung* & DE - A - 33 25322 --- | 1 | E 04 B   1/18 E 04 B   1/24 E 04 B   1/26 E 04 C   3/38 |
| A | M. MITTAG: "Baukonstruktionslehre", Auflage 15, Seite 65, Institut für Bauplanung und Bautechnik, 1971, Detmold, DE * Figur 32; Absatz "Allgemeines über Stahl-Verbindungsmittel" * --- | 1 | |
| A | US-A-3 414 300  (V.L. SPANE) * Figuren 1-6; Spalte 2, Zeile 8-27 * ----- | 2 | |

| RECHERCHIERTE SACHGEBIETE (Int. Cl.4) |
|---|
| E 04 B   1/00 E 04 C   3/00 |

Der vorliegende Recherchenbericht wurde für alle Patentansprüche erstellt

| Recherchenort | Abschlußdatum der Recherche | Prüfer |
|---|---|---|
| BERLIN | 27-07-1988 | BOUSQUET K.C.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)